(19) Europäisches Patentamt
European Patent Office
Office européen des brevets

(11) EP 0 752 548 B1

## (12) EUROPEAN PATENT SPECIFICATION

(45) Date of publication and mention
of the grant of the patent:
**01.09.1999 Bulletin 1999/35**

(51) Int Cl.6: **F16H 61/02**
// F16H59:50, F16H59:66,
F16H59:14

(21) Application number: **96109871.2**

(22) Date of filing: **19.06.1996**

(54) **Control system for vehicular automatic transmission with location detecting means**

Steuerungseinrichtung eines Automatikgetriebes mit Mitteln zur Ortungserfassung

Système de régulation d'une transmission automatique avec moyens de détection de position

(84) Designated Contracting States:
**DE FR GB**

(30) Priority: **06.07.1995 JP 17083195**

(43) Date of publication of application:
**08.01.1997 Bulletin 1997/02**

(73) Proprietor: **AISIN AW CO., LTD.**
**Anjo-shi Aichi-ken (JP)**

(72) Inventors:
• **Moroto, Shuzo**
**Anjo-shi, Aichi-ken, 444-11 (JP)**
• **Miki, Nobuaki**
**Anjo-shi, Aichi-ken, 444-11 (JP)**
• **Kusafuka, Muneo**
**Anjo-shi, Aichi-ken, 444-11 (JP)**
• **Murase, Yoshitaka**
**Anjo-shi, Aichi-ken, 444-11 (JP)**

(74) Representative: **VOSSIUS & PARTNER**
**Siebertstrasse 4**
**81675 München (DE)**

(56) References cited:
**EP-A- 0 532 365          DE-A- 4 337 163**
**US-A- 4 630 508**

• **PATENT ABSTRACTS OF JAPAN vol. 012, no. 182 (M-702), 27 May 1988 & JP-A-62 292947 (MAZDA MOTOR CORP), 19 December 1987,**

## Description

The present invention relates to a control system for a vehicular automatic transmission.

The vehicular automatic transmission is usually equipped with a shift map which is set beforehand with shift characteristics, so that a shift control matching the running status of the vehicle satisfactorily is effected by comparing the shift map with the vehicular running status such as the vehicle speed or the throttle opening to decide a gear stage.

Since, however, the control pattern in the shift control is set with reference to an ordinary run, an optimum gear stage is not always set when the vehicle runs in the road circumstances such as on uphill or downhill roads in which the driving force of the vehicle is different from that for flat roads.

Thus, there has been disclosed a shift control technique (i.e., Prior Art 1: JP-A-62 292 947, which corresponds to the preamble of Claim 1) which is enabled to match the road circumstances for the vehicle to run and to improve the running safety and the drive feeling by applying a navigation system with a memory and a position detecting device to the shift control for the automatic transmission so that the control pattern is changed on the basis of the road information obtained from the navigation system in addition to the running status of the vehicle.

Incidentally, a vehicle, as equipped with an automatic transmission, is demanded in recent years to have a lower power consumption from the standpoint of environmental pollution. The control pattern in the aforementioned shift control, as based upon the running status of the vehicle, is also set with reference to the ordinary run so that an optimum mileage cannot always be achieved when the fuel consumption rate changes with the change in the driving force, as based upon the road circumstances.

Thus, there has been disclosed a shift control technique (i.e., Prior Art 2: JP-A-95721/1981) which is enabled to improve the mileage by calculating the instantaneous driving force of the vehicle so that a gear stage optimizing the mileage may be set by comparing the driving force with a mileage map.

However, the aforementioned technique of Prior Art 1 can effect the shift control matching the road circumstances but not satisfy the demand for the fuel economy because the shift control does not take the mileage into consideration.

On the other hand, the aforementioned technique of Prior Art 2 can effect the shift control for improving the mileage at an instant during the vehicle run but cannot always be the one to have satisfactory running safety and drive feeling because the shift control does not consider the road circumstances to be run by the vehicle.

Therefore, the present invention has an object to provide a control system for a vehicular automatic transmission, which is enabled to realize a shift control having satisfactory running safety and drive feeling and optimizing the mileage, by applying a navigation system to the shift control of the automatic transmission to set the shift schedule from the present location to the location of a destination while considering the road circumstances and the mileage.

This object is achieved by the features of Claim 1.

Fig. 1 is a block diagram showing the construction of a control system for a vehicular automatic transmission according to an embodiment of the present invention;

Fig. 2 is a schematic control flow chart of the vehicular automatic transmission according to the embodiment of the present invention;

Fig. 3 is an explanatory diagram of the control example of the vehicular automatic transmission according to the embodiment of the present invention;

Fig. 4 is a diagram showing an example of the running route of the vehicle according to the embodiment of the present invention;

Fig. 5 is a diagram showing an example of the shift control map of the running route of the vehicle, as shown in Fig. 4;

Fig. 6 is a diagram showing an example of the fuel map according to the embodiment of the present invention;

Fig. 7 is a diagram showing an example of the shift control map considering the mileage according to the embodiment of the present invention;

Fig. 8 is an explanatory diagram showing a control example of the vehicular automatic transmission according to the embodiment of the present invention; and

Fig. 9 is a diagram showing an example of the use of the vehicular automatic transmission according to the embodiment of the present invention.

An embodiment of the present invention will be described in the following with reference to the accompanying drawings.

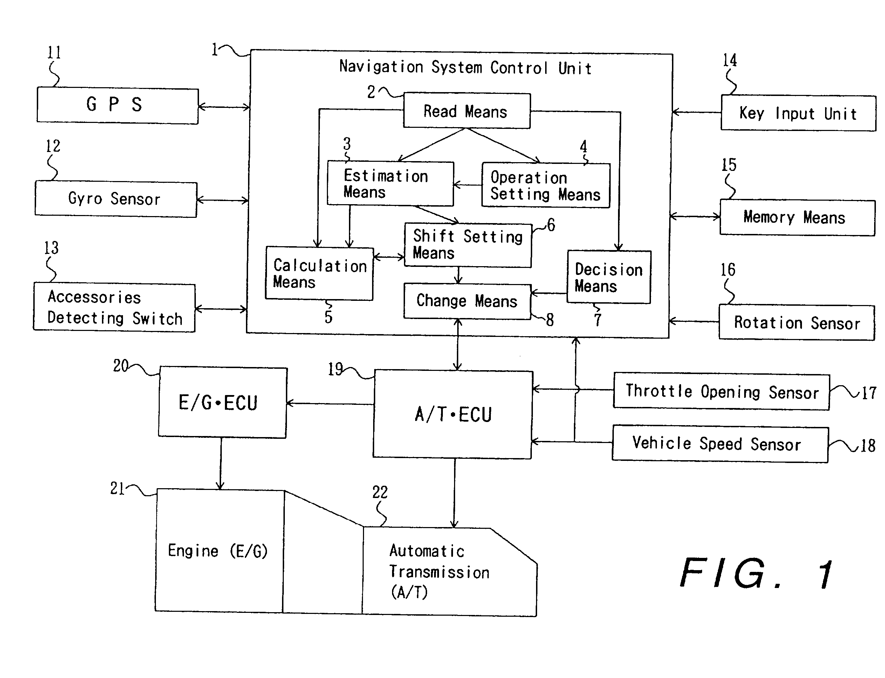

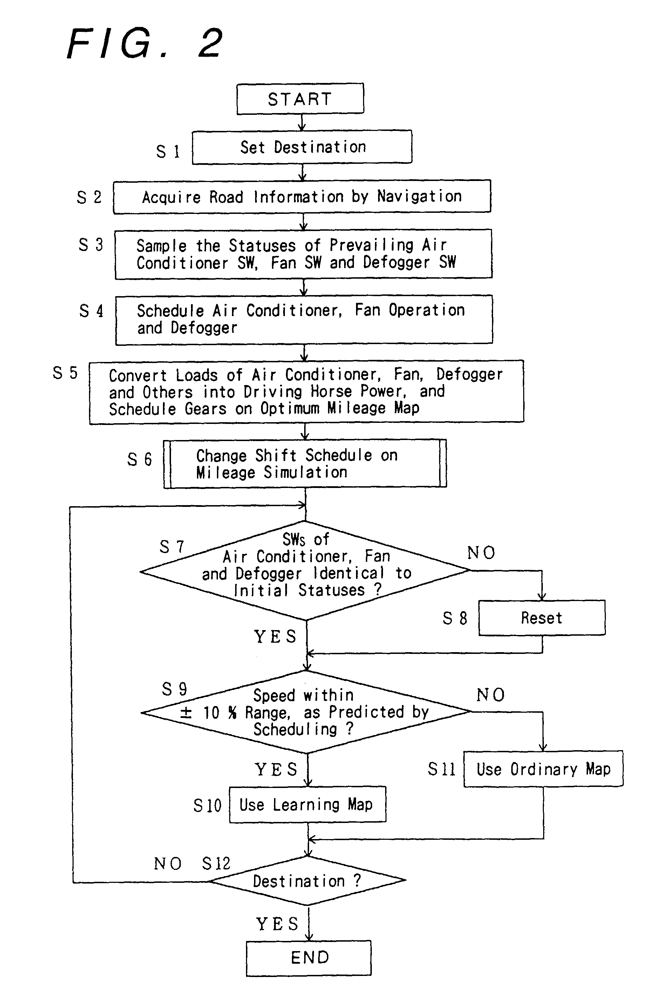

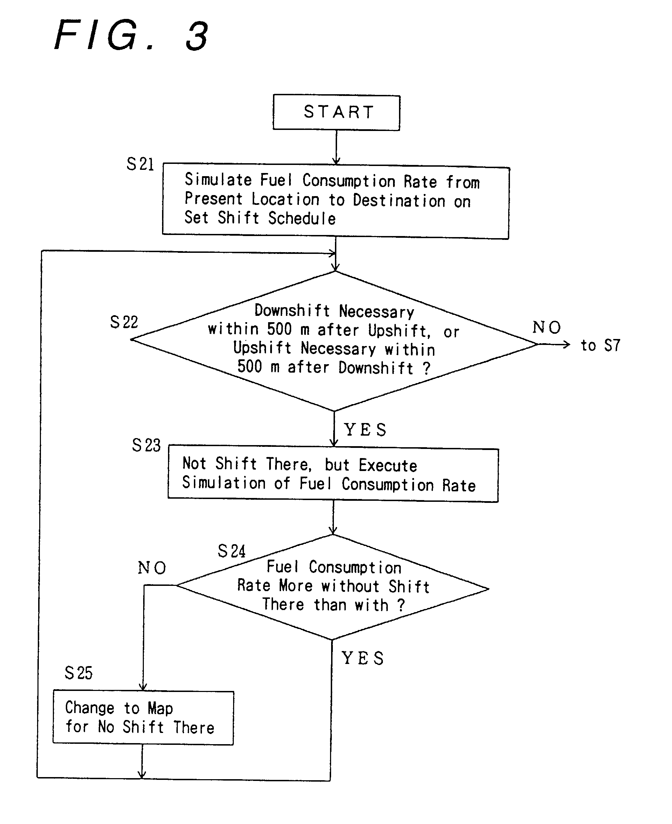

Fig. 1 is a block diagram showing a construction of a control system for a vehicular automatic transmission according to the embodiment of the present invention; Fig. 2 is a schematic control flow chart of the vehicular automatic transmission; and Fig. 3 is an explanatory diagram showing a control example of the vehicular automatic transmission.

In Fig. 1, a navigation system control unit 1 is constructed to include read means 2, estimation means 3, operation setting means 4, calculation means 5, shift setting means 6, decision means 7 and change means 8. With this navigation system control unit 1, there are individually connected a GPS (Global Positioning System) 11, a gyro sensor 12, an accessories detecting switch 13, a key input unit 14, memory means 15, a rotation sensor 16 and a vehicle speed sensor 18.

The change means 8 of the navigation system control unit 1 is connected with an automatic transmission electronic control unit (A/T ECU) 19 for controlling an automatic transmission (A/T) 22. Moreover, the A/T ECU 19 is connected with a throttle opening sensor 17, the vehicle speed sensor 18 and an engine electronic control unit (E/G ECU) 20 for controlling an engine (E/G) 21.

First of all, the navigation system control unit 1, the A/T ECU 19 and the E/G ECU 20 are initialized to operable statuses.

Next, data are inputted from the various sensors of the navigation system control unit 1, the A/T ECU 19 and the E/G ECU 20.

Thus, the A/T ECU 19 is provided with shift maps which are set in advance with shift characteristics. These shift maps are compared with the vehicle running status which is dictated by the vehicle speed coming from the vehicle speed sensor 18 and the throttle opening coming from the throttle opening sensor 17, so that a shift control matching the running status of the vehicle can be achieved by deciding the gear stage.

Moreover, the A/T ECU 19 is connected with the navigation system control unit 1, which can fetch the information coming from the memory means 15 stored beforehand with the information of the road to be run by the vehicle. On the basis of the information from the GPS 11 and the gyro sensor 12, on the other hand, the present location and the running direction of the vehicle are detected. On the basis of these detected information and the target location inputted, the road information of the running path from the present location to the destination of the vehicle is read out from the memory means 15 by the read means 2 so that the driving force of the vehicle on the running path is estimated by the estimation means 3 in accordance with the read road information.

The estimated driving force and a torque/fuel consumption characteristic stored beforehand are compared so that the shift schedule is so set by the shift setting means 6 as to minimize the fuel consumption rate on the running path. The torque/fuel consumption characteristic (mileage map) is desirably learned and updated at all times by determining the characteristics of the throttle opening, the engine RPM and the fuel injecting timing during the run. In accordance with the shift schedule thus set, moreover, the control pattern in the A/T ECU (or shift control means) 19 is changed by the change means 8.

On the other hand, the navigation system control unit 1 fetches the information from the accessories detecting switch 13 to detect the operating statuses of the accessories which operate to increase the engine load. The operation setting means 4 sets the operation schedules of the accessories for the running path in accordance with the operation statuses of the accessories and the road information of the read means 2. The estimation means 3 estimates the driving force of the vehicle for the running road in accordance with the road information from the read means 2 and the operation schedules of the accessories. The shift setting means 6 sets the shift schedule minimizing the fuel consumption rate for the running path by comparing the estimated driving force and the torque/fuel consumption characteristic stored beforehand. The change means 8 changes the control pattern in the A/T ECU 19 in accordance with the shift schedule which is set in the shift setting means 6.

Moreover, the operation setting means 4 sets, when the changes of the accessories from the initial status are detected by the operation status detecting means, the operation schedules of the accessories again in accordance with the changed operation status and the road information. A series of control processes in the estimation means 3, the shift setting means 6 and the change means 8 are repeated again in accordance with the operation schedule, as set again.

On the other hand, the engine control means increases the fuel injection rate at the shifting time of the automatic transmission. The calculation means 5 performs the simulation calculation of the fuel consumption rate in a plurality of patterns on the basis of the increased fuel injection rate by the engine control means, the road information coming from the read means 2, the driving force estimated by the estimation means 3 and the shift schedule set by the shift setting means 6. This shift setting means sets the shift schedule minimizing the fuel consumption rate, again on the basis of the calculation result of the calculation means 5. The change means 8 changes the control pattern of the A/T ECU 19 in accordance with the shift schedule, as set again by the shift setting means 6.

Moreover, the calculation means 5 calculates the fuel consumption rate on the basis of a first shift schedule, which is set by the shift setting means 6, and calculates, if it is decided on the basis of the road information coming from the read means 2 that the distance covered by the vehicle at the time of a shift from a first gear stage through a second gear stage to the first gear stage in the first shift schedule is shorter than a predetermined covered distance, the fuel consumption rate on the basis of a second shift schedule in which the shift to the second gear stage is not effected. The shift setting means 6 sets the second shift schedule again, when the calculation of the calculation means 5 results in that the fuel consumption rate based upon the first shift schedule is higher than that based upon the second shift schedule. The change means 8 changes the control pattern of the A/T ECU 19 in accordance with the second shift schedule which is set again by the shift setting means 6.

On the other hand, the decision means 7 decides whether or not the signal coming from the vehicle running status detecting means is within a predetermined range of the vehicle running status, as estimated by the estimation means 3 on the basis of the road information coming from the read means 2. The change means 8 does not change the shift pattern if the decision means 7 decides that the signal is not within the predetermined range.

A schematic control flow of the vehicular automatic transmission of the present invention will be described with reference to Fig. 2.

(1) First of all, the key input unit 14 is operated to set a destination (at Step S1).

(2) Next, the road information is acquired (at Step S2) from the memory means 15 by the navigation system control unit 1.

(3) Next, the information from the accessories detecting switch 13 is inputted. Specifically, the statuses of the prevailing air conditioner switch, fan switch and defogger switch are sampled (at Step S3).

(4) Next, the air conditioner, the fan operation and the defogger are scheduled (at Step S4).

(5) Next, the loads of the air conditioner, the fan, the defogger and others are converted into the driving horse power, and the gears are scheduled on the optimum mileage map (at Step S5).

(6) The shift schedule is changed (at Step S6) on the mileage simulation (as will be described in more detail).

(7) Next, it is checked (at Step S7) whether or not the switches of the air conditioner, the fan and the defogger are identical to the initial statuses.

(8) If the answer of Step S7 is NO, a reset is made (at Step S8).

(9) If the answer of Step S7 is YES, it is checked (at Step S9) whether or not the speed is within ± 10 % of the speed, as predicted by the scheduling.

(10) If the answer of Step S9 is YES, a learning map is used (at Step S10).

(11) If the answer of Step S9 is NO, an ordinary map is used (at Step S11).

(12) The operations of Step S7 to Step S11 are repeated (at Step S12) till the destination is reached.

Here will be described in detail the content of Step S6 with reference to the flow chart of a sub-routine, as shown in Fig. 3.

(1) First of all, the fuel consumption rate from the present location to the destination is simulated (at Step S21) on the basis of a set shift schedule.

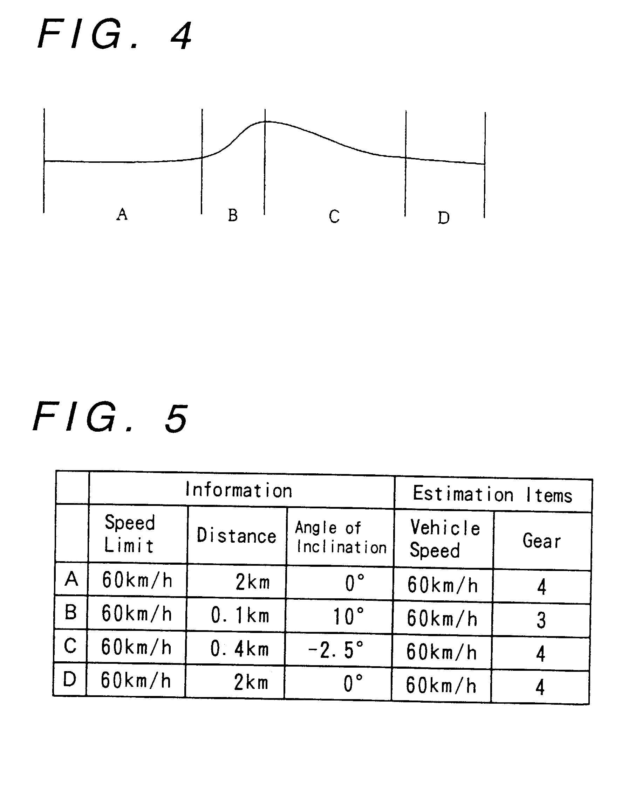

In the case of a route shown in Fig. 4, for example, there is obtained a shift control map, as shown in Fig. 5. Specifically, it is estimated: that at point A, the vehicle speed is at 60 Km/h by the 4th speed gear for a speed limit of 60 Km/h, a distance of 2 Km and an angle of inclination of 0 degrees; that at point B, the vehicle speed is 60 Km/h by the 3rd speed gear for a speed limit of 60 Km/h, a distance of 0.1 Km and an angle of inclination of 10 degrees (for an uphill); that at point C, the vehicle speed is 60 Km/h by the 4th speed gear for a speed limit of 60 Km/h, a distance of 0.4 Km and an angle of inclination of -2.5 degrees (for a downhill); and that at point D, the vehicle speed is 60 Km/h by the 4th speed gear for a speed limit of 60 Km/h, a distance of 2 Km and an angle of inclination of 0 degrees.

(2) Next, it is checked (at Step S22) whether or not there is a downshift necessary within 500 m after an upshift and whether or not there is an upshift necessary within 500 m after a downshift.

(3) If the answer of Step S22 is YES, any shift is not executed at the place, but the fuel consumption rate is simulated (at Step S23). If the answer of Step S22 is NO, the routine transfers to Step S7 (as shown in Fig. 2).

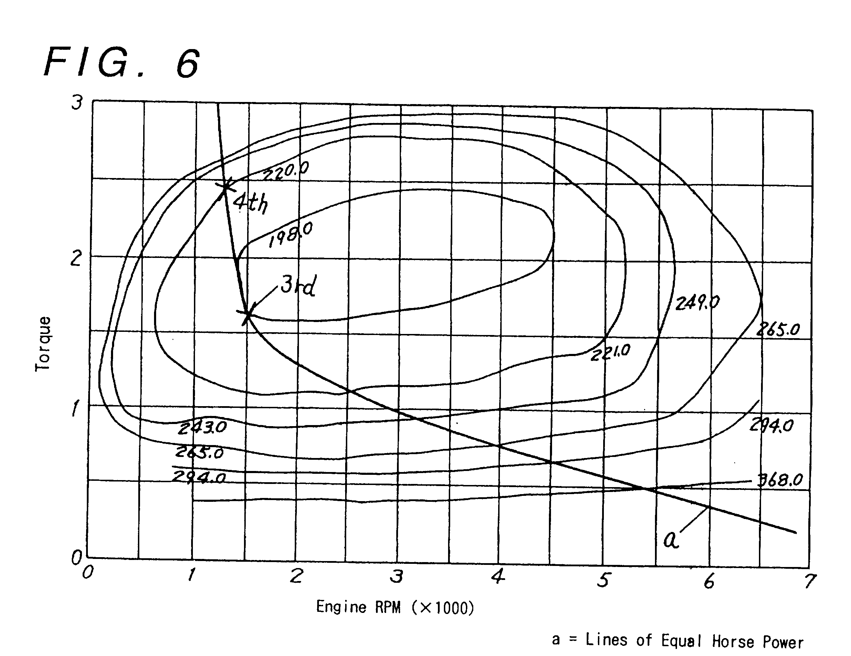

(4) It is checked (at Step S24) on the basis of the fuel map (as will be detailed), as shown in Fig. 6, whether or not the fuel consumption rate is more without than with the shift there.

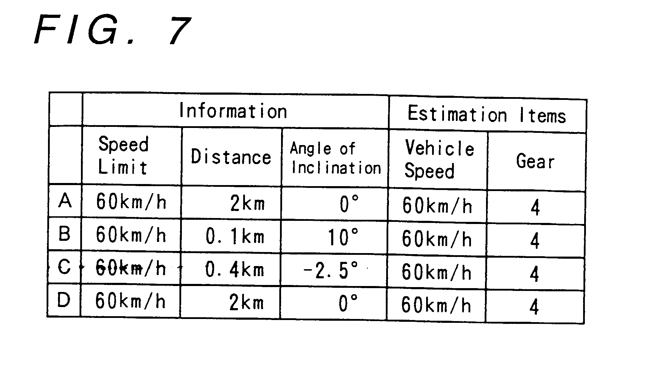

(5) If the answer of Step S24 is YES, the map is changed to that for no shift there (at Step S25). For example, the shift control map, as shown in Fig. 5, is changed to that, as shown in Fig. 7. At point B, no shift can spare the fuel consumption rate more so that not the 3rd gear but the 4th gear is set, as will be detailed. If the answer of Step S24 is YES, the routine returns to Step S22.

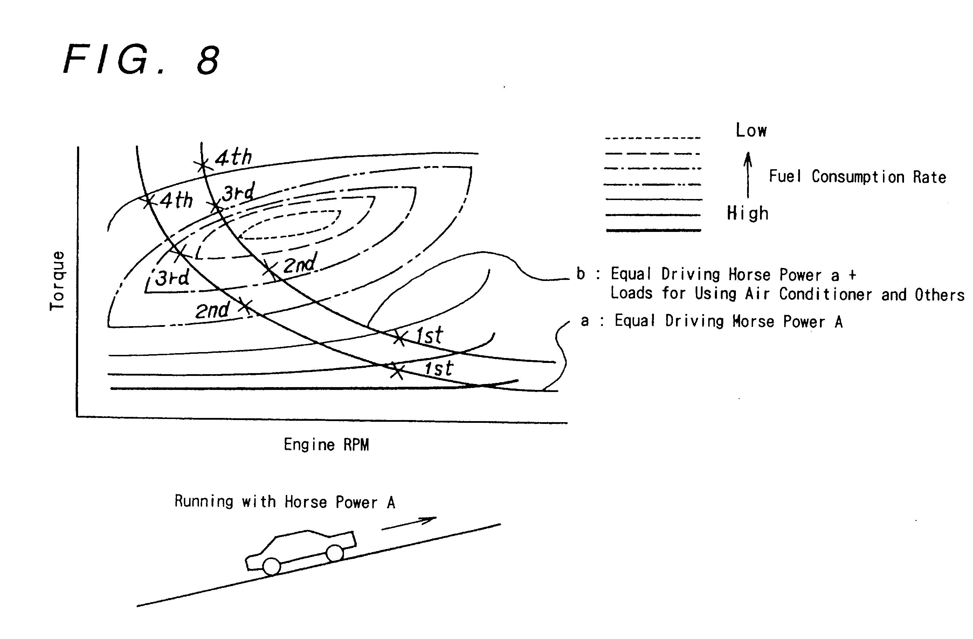

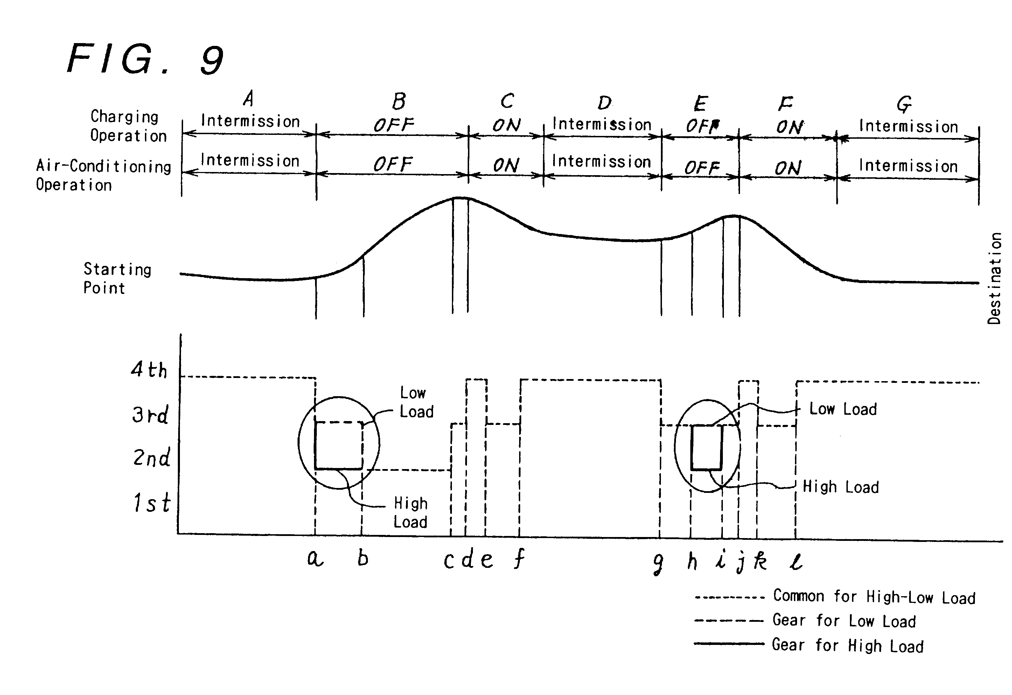

At the point shown in Fig. 9, moreover, there is shown the mileage map, to which are added the navigation information (e.g., the friction coefficient, moving information and inclination information of the road), as based upon the engine RPM and the driving torque of Fig. 8, and the vehicle information (e.g., the using load of the air conditioner and the number of occupants) at Step S5. Specifically, curve a indicates an equal driving horse power A (under a light load), and curve b indicates the case (under a heavy load) in which the load of using the air conditioner or the like is added to the equal driving horse power A. In this Figure, the optimum gear under the light load is the 3rd, that is, the optimum gear for the run by the equal driving horse power A is the 3rd gear. The optimum gear under the heavy load is the 2nd, that is, the optimum gear for the run of the equal driving horse power + the load for using the air conditioner is the 2nd gear.

As shown in Fig. 9, moreover, the navigation system is used. The "timing for the shift" and "what gear is to be selected" are so determined on the basis of the road information (e.g., the inclination information) from the starting point to the destination as to minimize the fuel consumption rate totally from the fuel map, and the shift is effected according to the determined shift timing and selected gear.

When the fuel consumption rate is simulated to decide that no shift can improve the mileage, the command of "no shift" is sent from the navigation system to the A/T ECU 19 to effect no shift.

Thus, a gear stage of highly efficient fuel consumption can be automatically set by the A/T ECU 19 on the basis of the navigation information and the vehicle information.

Here, the fuel consumption rate in the control of the vehicular automatic transmission of the present invention is calculated in the following manner.

(1) The equal running load horse power F (of reference) is calculated by:

$$F = kX \times SP/75 \text{ (ps)},$$

wherein

k: Constant, X: Vehicle Weight (Kg),
SP: Vehicle Speed (m/s), and
75: Constant (1 ps = 75 Kgf m/s).

Incidentally, the vehicle speed SP is estimated from the speed limit information of the road information.

(2) The equal running load horse power F (changed on the road information and the vehicle speed) is calculated by:

$$F \text{ } k(X + x) \times SP/75 + f \text{ (ps)},$$

wherein

x: Variable (Kg), and
f: Variable (ps).

Incidentally, the variable x is a conversion of the number of occupants or the road inclination into the weight. Moreover, the variable f is a load horse power, as changed by the operation statuses of the accessories. These data are stored in advance.

(3) The engine torque Te is calculated by:

$$Te = F \times r/\text{Gear Ratio} \times D \text{ (Kgf m)},$$

wherein

r: Effective Diameter of Driving Wheels,
D: Differential Ratio, and

Gear Ratio, as exemplified by:

1st: 2.50
2nd: 1.50
3rd: 1.00
4th: 0.75.

(4) The equal fuel consumption rate F1 and the engine RPM Ne are calculated in the following manner:

The equal fuel consumption rate F1 (g/ps h) for the equal running load horse power F and the engine torque Te and the engine RPM Ne (rpm) are determined from the torque/fuel consumption characteristic (mileage map).

Here, the shift schedule for the vehicular running path is set by selecting the gear stage of the minimum equal fuel consumption rate.

(5) The fuel consumption rate FL is calculated by:

$$FL = F1 \times Ne \times T \text{ (g rpm/ps)},$$

wherein

T: hour (h).

The fuel consumption rates for the 3rd speed and the 4th speed are determined from the torque/fuel consumption characteristics (mileage map) shown in Fig. 6, for example. For the run of the vehicle at a predetermined equal horse power, the fuel consumption rate at point B in the route of Fig. 4 is determined at the speed of 60 Km/h and for the distance of 0.1 Km in the following manner:

for

$$Ne = 1,500 \text{ and } F1 = 198 \text{ at the 3rd speed,}$$

$$1,500 \times 198 \times (0.1 \times 60)/60 = 495 \text{ g rpm/ps}$$

and

for

$$Ne = 1,350 \text{ and } F1 = 220 \text{ at the 4th speed,}$$

$$1,350 \times 220 \times (0.1 \times 60)/ 60 = 495 \text{ g rpm/ps}$$

If the increase (1.5 times as high as the ordinary one) in the delay angle at the shift from the 3rd to 4th speeds and from the 4th to 3rd speeds is considered, the fuel consumption rate can be spared from the 4th to 3rd speeds and from the 3rd to 4th speeds, as follows:

$$29,700 + [(198 + 220) \times (1/2)] = 498 \text{ g rpm/ps}$$

Hence, it is found that no shift is better.

It is further assumed that the route shown in Fig. 9 be selected.

At points A, D and G, the ordinary operation is executed. The air conditioner and the battery charging are OFF at points B and E but ON at points C and F. Thus, the useless energy release at points C and F is eliminated to improve the fuel consumption rate.

On the basis of the road information, moreover, the optimum gear can be set. In other words, the shift control can be finely effected on the basis of the navigation information and the vehicle information, in which is considered the mileage.

Here is regenerated the released energy by setting the gear under the heavy load from the 4th to 2nd speed and the gear under the light load from the 4th to 3rd speed at a point from a to b, by setting the gear under the heavy load from the 3rd to 2nd speeds at a point from h to i, and by braking the engine at a point from e to f and at a point from k to l. For example, the battery is charged not for an uphill slope but for a downhill slope.

The description thus far made is summarized in the following manner.

(1) During the run, the characteristics of the throttle opening - the engine RPM - the fuel injection time of the vehicle are determined to update the learning of the mileage map on the basis of the characteristics.

(2) The variation from the ideal status (e.g., the air conditioner OFF or the number of occupants) of the vehicle is converted into a driving load, and this value is determined.

(3) By using the navigation system, the friction coefficient, moving information and inclination information of the road are converted into a driving load, and this value is determined.

(4) On the basis of the foregoing informations (1) to (3) and the information from the starting point to the destination by the navigation system, the gear simulation for optimizing the fuel consumption rate is executed and determined.

(5) The simulated gear is used, if the vehicle speed estimated during the run is within an error of ± 10 %, but otherwise the ordinary shift is executed.

(6) Moreover, the intermissions such as the air conditioning operation or the battery charging operation, as can be effected at the time of selecting the route, are scheduled.

[1] Thanks to the construction described above, according to the invention as set forth in claim 1, the driving force on the running path from the present location to the destination location of the vehicle is estimated according to the road information coming from the read means. Specifically, the driving force changing with the circumstances of the road to be run by the vehicle, such as uphill or downhill roads or flat roads is estimated on the basis of the road information on the vehicular running path, as obtained from the navigation system, so that the driving force matching beforehand the running circumstances of the vehicle satisfactorily can be estimated.

On the other hand, the estimated driving force and the mileage map stored beforehand are compared by the shift setting means to set the shift schedule which minimizes the fuel consumption rate for the running path, so that the shift schedule matching the road circumstances satisfactorily for the running path of the vehicle and minimizing the fuel consumption rate can be set in advance. According to the set shift schedule, moreover, the control pattern of the shift control matching the ordinary vehicular running status is changed by the change means. The shift control matching the running status of the vehicle is performed at the ordinary running time, for example. When the predetermined running status is estimated beforehand by the estimation means, the gear stage of the preset shift schedule is applied in place of the ordinary shift control.

As a result, the shift control for the running path from the present location to the destination location of the vehicle can be effected by considering the road circumstances and the mileage so that it can be realized to satisfy the running safety and the drive feeling and to optimize the mileage.

[2] According to the invention as set forth in claim 2, the status using the accessories such as an air conditioner or a defogger is thought to influence the driving force and the mileage at the vehicle running time. By the shift control considering such vehicle information, as in claim 1, it seems possible to improve the drive feeling and the mileage. By setting the operation schedules of the accessories according to the road information, therefore, the increase in the engine load due to the operations of the accessories is reduced by turning OFF the air conditioner to reduce the driving force for an uphill road, as deemed to increase the driving force of the vehicle, and ON the air conditioner for a downhill road, as deemed to decrease the driving force. As a result, the total driving force for the running path of the vehicle can be reduced to realize the fuel economy.

On the other hand, the driving force is estimated according to the operation schedules of the accessories and the road information (e.g., the uphill or downhill roads or the limit speed), and the driving force and the mileage map stored beforehand are compared to set the shift schedule minimizing the fuel consumption rate for the running path. As a result, the shift schedule is set according to the driving force which considers its increase due to an uphill run or the light ON status and its decrease due to a downhill run or the air conditioner OFF, so that the shift schedule can be set to match the change in the driving force depending upon the road circumstances and the operating statuses of the accessories.

As a result, the shift control considering the road information for the running path of the vehicle, the vehicle information and the mileage can be effected to improve the drive feeling and the mileage.

[3] According to the invention as set forth in claim 3, the operation statuses of the accessories may be changed during the run of the vehicle by the driver or a timer, and the driving force of the vehicle may accordingly be changed. If the operations of the accessories or the shifts are controlled according to the accessories operation schedules or the shift schedule, as preset beforehand, the driver may not only feel a physical disorder but also fail to effect the run of optimum mileage.

Thus, when a change in the accessories from the initial status is detected by the operation status detecting means, the operation schedule is set again, and the following controls are repeated again. Even if the operation statuses of the accessories are changed during the vehicle run by the driver or the timer, the accessories operation schedules or the shift schedule can be set again to match the changes so that the driver can be prevented from feeling the physical disorder or from failing to effect the optimum mileage run.

[4] According to the invention as set forth in claim 4, in some vehicles of recent years, the torque reduction control (or the angle delaying control) for reducing the engine torque at the shifting time is performed to weaken the shift shock of the automatic transmission. When this engine torque control is performed, the fuel injection rate is increased to prevent the combustion temperature of the engine from rising thereby to cool down the engine with the increased fuel.

The satisfactory drive feeling and the economic run are made compatible by the shift control considering the road conditions for the vehicular running path and the fuel consumption rate, as exemplified in claim 1. For a vehicle which is controlled to increase the fuel injection rate at that shifting time, however, the gear change is frequently made depending upon the road circumstances such as a mountainous road. Then, the fuel may be less consumed without any gear change, if the total fuel consumption rate is calculated from the present location to the destination location of the vehicle. This leaves room for improvements.

Thus, on the basis of the informations coming from the engine control means, the read means, the estimation means and the shift setting means, the fuel consumption rates in a plurality of patterns are simulated to set again the shift schedule minimizing the fuel consumption rate on the basis of the simulation result. When the vehicle is running under the road circumstances in which a relatively short flat road exists midway of an uphill estimated desirable for the run at the 3rd speed, the speed change to the 4th speed is not effected on that flat road if the fuel consumption rate is less without any shift than with the shift to the 4th speed on the flat road. As a result, the total fuel consumption rate for the running path of the vehicle can be minimized to apply the shift control of claim 1 to the vehicle, in which the fuel injection rate at the shifting time is increased, so that a satisfactory drive feeling and a economic run can be made compatible.

[5] According to the invention as set forth in claim 5, it is necessary for the control of claim 4 that the running safety and the satisfactory drive feeling, as realized by the shift schedule matching the driving force, and the optimum mileage run, as realized by the shift schedule based upon the mileage simulation, be compatible to a satisfactory extent. In other words, it is necessary to prevent the running safety and the satisfactory drive feeling from being seriously deteriorated by the changes of the shift characteristics, as so made by the navigation system on the basis of the mileage simulation as to match the road circumstances for the running path of the vehicle.

Thus, the calculation means calculates the mileage on the basis of the first shift schedule according to the driving force, and calculates, if it is decided that the distance covered by the vehicle at the time of the shift from the first gear stage through the second gear stage to the first gear stage in the first shift schedule is shorter than a predetermined covered distance, the mileage on the basis of the second shift schedule in which the shift to the second gear stage is not effected. The shift setting means sets the second shift schedule again, when the calculation results in that the fuel consumption rate based upon the second shift schedule is lower. The change means changes the control pattern of the shift control means in accordance with the second shift schedule. The shift schedule, as based upon the mileage simulation, is set again by selecting the place, in which a predetermined shift is effected under a predetermined road circumstance estimated to prefer the gear change in the shift schedule according to the driving force, that is, as is hardly influenced even if changed to effect no gear change.

Thus, the shift control making the optimum mileage run can be realized even in a vehicle in which the fuel injection rate is increased at the shifting time, without deteriorating the running safety and the satisfactory drive feeling, as realized by the shift schedule according to the road information for the running path of the vehicle.

[6] According to the invention as set forth in claim 6, in order to estimate the driving force for the running path of the vehicle, as in claim 1, it is necessary to estimate the vehicular running status at that time. This necessity can be satisfied by the estimation means for estimating the vehicular running status from the limit speed or the like so that the driving force can be estimated on the basis of the running status. However, the actual running status of the vehicle is not always identical to that which is estimated from the road information. If the actual vehicular running status is made not to conform to the estimated one by an unintended braking action, the driving force of the vehicle also changes. In the shift schedule as set beforehand by the shift setting means, therefore, the driver may feel the physical disorder, or the mileage may deteriorate.

Therefore, there is provided the decision means for deciding whether or not the actual running status of the vehicle within the predetermined range of the estimated one. If this decision means decides that the actual running status is outside of the predetermined range, the optimum shift control is effected during the ordinary run in accordance with the shift schedule considering the road circumstances and the mileage, by leaving the control pattern undone according to the preset shift schedule. When the inconsistency occurs between the actual and estimated running statuses of the vehicle due to an unintended braking action, the shift control is effected according to the ordinary running status so that the driver can be prevented from feeling the physical disorder or that the mileage can be prevented from being deteriorated.

As described hereinbefore, it is possible to realize a shift control having satisfactory running safety and drive feeling and optimizing the mileage, by applying a navigation system to the shift control of the automatic transmission to set a shift schedule from the present location to the location of a destination while considering the road circumstances and the mileage.

## Claims

1. A control system for a vehicular automatic transmission (22), comprising: running status detecting means for detecting the running status of a vehicle; and shift control means (19) for controlling the gear stage of the automatic transmission (22) in accordance with the running status of the vehicle, having

   (a) memory means (15) for storing beforehand the information of a road to be run by the vehicle;
   (b) detection means (11) for detecting the present location and running direction of the vehicle;
   (c) read means (2) for retrieving road information along the route, such as speed limit, slope and road friction coefficient, from said memory means (15) on the basis of the signal of said detection means (11) and the destination location inputted;
   (d) change means (8) for changing a control pattern of said shift control means (19) in accordance with the set shift schedule;

   characterized by

   (e) estimation means (3) for estimating the driving force of the vehicle on the route in accordance with the road information read out; and
   (f) shift setting means (6) for setting such a shift schedule as to minimize the fuel consumption rate on the route by comparing the estimated driving force and a torque/fuel consumption characteristic stored beforehand.

2. A system according to claim 1, further comprising operation status detecting means (13) for detecting the operation statuses of accessories which operate to increase the engine load; and operation setting means (4) for setting the operation schedules of said accessories on the route,

   wherein said estimation means (3) estimates the driving force of the vehicle on the route in accordance with the road information coming from said read means (2) and the operation schedules of said accessories,
   wherein said shift setting means (6) sets the shift schedule for minimizing the fuel consumption rate on the route by comparing the estimated driving force and a torque/fuel consumption characteristic stored beforehand, and
   wherein said change means (8) changes a control pattern of said shift control means (19) in accordance with the shift schedule set by said shift setting means (6).

3. A system according to claim 2,

   wherein said operation setting means (4) sets the operation schedules of said accessories again in accordance with said changed operation status and said road information when the changes of said accessories from their initial statuses are detected by said operation status detecting means (13) while said vehicle is running on said route, and
   wherein a series of control processes of said estimation means (3), said shift setting means (6) and said change means (8) are repeated again according to the operation schedule, as set again.

4. A system according to claim 3, further comprising: engine control means (20) for increasing the fuel injection rate at a shifting time of the automatic transmission (22); and calculation means (5) for simulating the fuel consumption rates in a plurality of patterns on the basis of the increase in the fuel by said engine control means (20), the road information coming from said read means (2), the driving force estimated by said estimation means (3) and the shift schedule set by said shift setting means (6),

   wherein said shift setting means (6) sets again the shift schedule minimizing the fuel consumption rate on the basis of the calculation result of said calculation means (5), and
   wherein said change means (8) changes the control pattern of said shift control means (19) in accordance with the shift schedule set again by said shift setting means (6).

5. A system according to claim 4,

wherein the calculation means (5) calculates the fuel consumption rate on the basis of a first shift schedule, which is set by said shift setting means (6), and calculates, if it is decided on the basis of the road information coming from said read means (2) that the distance covered by the vehicle at the time of a shift from a first gear stage through a second gear stage to the first gear stage in the first shift schedule is shorter than a predetermined covered distance, the fuel consumption rate on the basis of a second shift schedule in which the shift to the second gear stage is not effected,

wherein said shift setting means (6) sets the second shift schedule again, when the calculation of said calculation means (5) results in that the fuel consumption rate based upon the first shift schedule is higher than that based upon the second shift schedule, and

wherein said change means (8) changes the control pattern of said shift control means (19) in accordance with the second shift schedule set again by said shift setting means (6).

6. A system according to claim 5, further comprising decision means (7) which decides whether or not the signal coming from said vehicle running status detecting means (11) is within a predetermined range of the vehicle running status, as estimated by said estimation means (3) on the basis of the road information coming from said read means (2),

wherein said change means (8) does not change the shift pattern if said decision means (7) decides that said signal is not within the predetermined range.

**Patentansprüche**

1. Steuersystem für das Automatikgetriebe (22) eines Fahrzeugs aufweisend: eine Fahrzustand-Detektionseinrichtung zum Detektieren des Fahrzustands eines Fahrzeugs; und eine Schaltsteuereinrichtung (19) zum Steuern der Gangstufe des Automatikgetriebes (22) in Abhängigkeit von dem Fahrzeugfahrzustand mit:

(a) einer Speichereinrichtung (15) zum Vorabspeichern der Information über eine von dem Fahrzeug zu befahrende Straße;
(b) einer Detektionseinrichtung (11) zum Detektieren des momentanen Ortes und der Fahrrichtung des Fahrzeugs;

(c) einer Leseeinrichtung (2) zum Auslesen der Straßeninformation entlang der Strecke, wie z. B. einer Geschwindigkeitsbeschränkung, Steigung und eines Straßenreibungskoeffizienten, aus der Speichereinrichtung (15) auf der Basis des Signals aus der Detektionseinrichrung (11) und des eingegebenen Zielortes;
(d) einer Änderungseinrichtung (8) zum Ändern eines Steuermusters der Schaltsteuereinrichtung (19) in Abhängigkeit von dem Schaltprogramm;

gekennzeichnet durch:

(e) eine Abschätzungseinrichtung zum Abschätzen der Antriebskraft des Fahrzeugs auf der Strecke in Abhängigkeit von der ausgelesenen Straßeninformation; und
(f) eine Schaltvorgabeeinrichtung (6) zum Vorgeben eines Schaltprogramms in der Weise, daß die Kraftstoffverbrauchsrate auf der Strekke durch Vergleichen der abgeschätzten Antriebskraft und einer im voraus gespeicherten Drehmoment/Kraftstoffverbrauchs-Charakteristik minimiert wird.

2. System nach Anspruch 1, ferner mit einer Betriebszustand-Detektionseinrichtung (13) zum Detektieren der Betriebszustände von Hilfsaggregaten, welche unter Erhöhung der Motorbelastung arbeiten; und mit einer Betriebsvorgabeeinrichtung (4) zum Vorgeben der Betriebsprogramme der Hilfsaggregate auf der Strecke,

wobei die Abschätzungseinrichtung (3) die Antriebskraft des Fahrzeugs auf der Strecke abhängig von der von der Leseeinrichtung (2) kommenden Straßeninformation und von den Betriebsprogrammen der Hilfsaggregate abschätzt,

wobei die Schaltvorgabeeinrichtung (6) das Schaltprogramm zur Minimierung der Kraftstoffverbrauchsrate auf der Strecke durch Vergleichen der abgeschätzten Antriebskraft und einer im voraus gespeicherten Drehmoment/Kraftstoffverbrauchs-Charakteristik vorgibt, und

wobei die Änderungseinrichtung (8) ein Steuermuster der Schaltsteuereinrichtung (19) abhängig von dem von der Schaltvorgabeeinrichtung (6) vorgegebenem Schaltprogramm ändert.

3. System nach Anspruch 2,

wobei die Betriebsvorgabeeinrichtung (4) die Betriebsprogramme der Hilfsaggregate wiederum abhängig von dem veränderten Betriebszustand und der Straßeninformation vorgibt, wenn die Veränderungen der Hilfsaggregate aus ihren ursprünglichen Zuständen von der Betriebszustand-Detektionseinrichtung (13) während der Fahrt des Fahrzeugs auf der Strecke detektiert werden, und

wobei eine Reihe von Steuerprozessen der Abschätzungseinrichtung (3), der Schaltvorgabeeinrichtung (6) und der Änderungseinrichtung (8) wieder abhängig von dem nochmals vorgegebenen Betriebsprogramm wiederholt werden.

4. System nach Anspruch 3 ferner aufweisend: eine Motorsteuereinrichtung (20) zum Erhöhen der Kraftstoffeinspritzrate zu einem Schaltzeitpunkt des Automatikgetriebes (22); und eine Berechnungseinrichtung (5) zum Simulieren der Kraftstoffverbrauchsraten in mehreren Mustern auf der Basis der Erhöhung der Kraftstoffmenge durch die Motorsteuereinrichtung (20), der von der Leseeinrichtung (2) kommenden Straßeninformation, der von der Abschätzungseinrichtung (3) geschätzten Antriebskraft und dem von der Schaltvorgabeeinrichtung (6) vorgegebenen Schaltprogramm,

wobei die Schaltvorgabeeinrichtung (6) wiederum das die Kraftstoffverbrauchsrate minimierende Schaltprogramm auf der Basis des Berechnungsergebnisses der Berechnungseinrichtung (5) vorgibt, und

wobei die Änderungseinrichtung (8) das Steuermuster der Schaltsteuereinrichtung (19) abhängig von dem wieder von der Schaltvorgabeeinrichtung (6) vorgegebenen Schaltprogramm ändert.

5. System nach Anspruch 4,

wobei die Berechnungseinrichtung (5) die Kraftstoffverbrauchsrate auf der Basis eines ersten Schaltprogramms berechnet, welches von der Schaltvorgabeeinrichtung (6) vorgegeben wird, und dann, wenn auf der Basis der von der Leseeinrichtung (2) kommenden Straßeninformation entschieden wird, daß die von dem Fahrzeug zum Zeitpunkt eines Schaltvorgangs von einer ersten Gangstufe über eine zweite Gangstufe zu der ersten Gangstufe zurücklegbare Strecke kürzer als eine vorbestimmte zurücklegbare Strekke ist, die Kraftstoffverbrauchsrate auf der Basis eines zweiten Schaltprogramms berechnet, in welchem der Schaltvorgang auf die zweite Gangstufe nicht ausgeführt wird,

wobei die Schaltvorgabeeinrichtung (6) das zweite Schaltprogramm wieder vorgibt, wenn die Berechnung der Berechnungseinrichtung (5) zu dem Ergebnis führt, daß die Kraftstoffverbrauchsrate auf der Basis des ersten Schaltprogramms höher als die auf der Basis des zweiten Schaltprogramms ist, und

wobei die Änderungseinrichtung (8) das Steuermuster der Schaltsteuereinrichtung (19) abhängig von dem wieder von der Schaltvorgabeeinrichtung (6) vorgegebenen zweiten Schaltprogramm ändert.

6. System nach Anspruch (5), ferner aufweisend eine Entscheidungseinrichtung (7), welche entscheidet, ob sich das von der Fahrzeugfahrzustand-Detektionseinrichtung (11) kommende Signal innerhalb eines vorbestimmten Bereichs des Fahrzeugfahrzustands, so wie er von der Abschätzungseinrichtung (3) auf der Basis der von der Leseeinrichtung (2) kommenden Straßeninformation abgeschätzt wird, befindet oder nicht,

wobei die Änderungseinrichtung (8) das Schaltmuster nicht ändert, wenn die Entscheidungseinrichtung (7) entscheidet, daß sich das Signal nicht innerhalb des vorbestimmten Bereichs befindet.

## Revendications

1. Système de commande pour transmission automatique (22) de véhicule, comprenant : un moyen de détection d'état de marche servant à détecter l'état de marche d'un véhicule; et un moyen de commande de passage (19) servant à commander le rapport de la transmission automatique (22) en fonction de l'état de marche du véhicule, comportant

(a) un moyen formant mémoire (15) servant à stocker au préalable des informations concernant une route que le véhicule doit emprunter;
(b) un moyen de détection (11) servant à détecter la position et la direction actuelles du véhicule;
(c) un moyen de lecture (2) servant à extraire dudit moyen formant mémoire (15) des informations de route le long du trajet, telles que la vitesse limite, la pente et le coefficient de frottement de la route en prenant pour base le signal dudit moyen de détection (11) et la destination entrée;
(d) un moyen de changement (8) servant à changer un schéma de commande dudit moyen de commande de passage (19) en fonction du plan de passage établi;

caractérisé par

(e) un moyen d'estimation (3) servant à estimer la force d'entraînement du véhicule sur le trajet en fonction des informations de route lues; et

(f) un moyen de sélection des passages (6) servant à établir un plan de passage minimisant le taux de consommation de carburant sur le trajet en comparant la force d'entraînement estimée et une caractéristique de consommation couple/carburant stockée au préalable.

2. Système selon la revendication 1, comprenant de plus un moyen de détection d'état de fonctionnement (13) servant à détecter les états de fonctionnement d'accessoires qui fonctionnent en augmentant la charge du moteur; et un moyen de sélection de fonctionnement (4) servant à établir les plans de fonctionnement desdits accessoires sur le trajet,

dans lequel ledit moyen d'estimation (3) estime la force d'entraînement du véhicule sur le trajet en fonction des informations de route provenant dudit moyen de lecture (2) et des plans de fonctionnement desdits accessoires,

dans lequel ledit moyen de sélection des passages (6) sélectionne le plan de passage pour minimiser le taux de consommation sur le trajet en comparant la force d'entraînement estimée et une caractéristique de consommation couple/carburant stockée au préalable, et

dans lequel ledit moyen de changement (8) change un schéma de commande dudit moyen de commande de passage (19) en fonction du plan de passage établi par ledit moyen de sélection des passages (6).

3. Système selon la revendication 2, dans lequel ledit moyen de sélection de fonctionnement (4) resélectionne les plans de fonctionnement desdits accessoires en fonction desdits états de fonctionnement changés et desdites informations de route lorsque les changements des états initiaux desdits accessoires sont détectés par ledit moyen de détection d'état de fonctionnement (13) lorsque ledit véhicule parcourt ledit trajet, et dans lequel une série de processus de commande dudit moyen d'estimation (3), dudit moyen de sélection des passages (6) et dudit moyen de changement (8) est répétée en fonction du plan de fonctionnement resélectionné.

4. Système selon la revendication 3, comprenant de plus : un moyen de commande de moteur (20) servant à augmenter le taux d'injection de carburant à un instant de passage de la transmission automatique (22); et un moyen de calcul (5) servant à simuler les taux de consommation en carburant d'une pluralité de schémas en se basant sur l'augmentation de carburant par ledit moyen de commande de moteur (20), les informations de route provenant dudit moyen de lecture (2), la force d'entraînement estimée par ledit moyen d'estimation (3) et le plan de passage établi par ledit moyen de sélection des passages (6),

dans lequel ledit moyen de sélection des passages (6) resélectionne le plan de passage minimisant le taux de consommation de carburant en se basant sur les résultats de calculs desdits moyen de calcul (5), et

dans lequel ledit moyen de changement (8) change le schéma de commande dudit moyen de commande de passage (19) en fonction du plan de passage resélectionné par ledit moyen de sélection des passages (6).

5. Système selon la revendication 4,

dans lequel ledit moyen de calcul (5) calcule le taux de consommation de carburant en se basant sur un premier plan de passage, qui est établi par ledit moyen de sélection des passages (6), et calcule, s'il est décidé sur la base des informations de route provenant dudit moyen de lecture (2) que la distance couverte par le véhicule à l'instant d'un passage d'un premier rapport à un second rapport au premier rapport dans le premier plan de passage est plus courte qu'une distance couverte prédéterminée, le taux de consommation de carburant sur la base d'un second plan de passage dans lequel le passage au second rapport n'est pas effectué,

dans lequel ledit moyen de sélection des passages (6) resélectionne le second plan de passage lorsque les calculs dudit moyen de calcul (5) donnent que le taux de consommation de carburant basé sur le premier plan de passage est plus élevé que celui basé sur le second plan de passage, et

dans lequel ledit moyen de changement (8) change le schéma de commande dudit moyen de commande de passage (19) en fonction du second plan de passage resélectionné par ledit moyen de sélection des passages (6).

6. Système selon la revendication 5, comprenant de plus un moyen de décision (7) qui décide si oui ou non le signal provenant dudit moyen de détection (11) d'état de marche du véhicule est à l'intérieur d'une plage prédéterminée de l'état de marche du véhicule, tel qu'estimé par ledit moyen d'estimation (3) sur la base des informations de route provenant dudit moyen de lecture (2),

dans lequel ledit moyen de changement (8) ne change pas le schéma de passage si ledit moyen de décision (7) décide que ledit signal n'est pas à l'intérieur de la plage prédéterminée.

FIG. 1

# FIG. 2

```
                        START

S 1              Set Destination

S 2        Acquire Road Information by Navigation

S 3        Sample the Statuses of Prevailing Air
           Conditioner SW, Fan SW and Defogger SW

S 4        Schedule Air Conditioner, Fan Operation
           and Defogger

S 5        Convert Loads of Air Conditioner, Fan, Defogger
           and Others into Driving Horse Power, and
           Schedule Gears on Optimum Mileage Map

S 6        Change Shift Schedule on
           Mileage Simulation
```

S 7  SWs of Air Conditioner, Fan and Defogger Identical to Initial Statuses ?  — NO → S 8  Reset

YES

S 9  Speed within ± 10 % Range, as Predicted by Scheduling ?  — NO → S 11  Use Ordinary Map

YES

S 10  Use Learning Map

NO  S 12  Destination ?

YES

END

# FIG. 3

```
                        ┌──────────────┐
                        │    START     │
                        └──────┬───────┘
                               │
  S21   ┌───────────────────────────────────────┐
        │ Simulate Fuel Consumption Rate from    │
        │ Present Location to Destination on     │
        │ Set Shift Schedule                     │
        └───────────────────┬───────────────────┘
                            │
                            ▼
  S22         Downshift Necessary
         within 500 m after Upshift, or        NO
         Upshift Necessary within        ──────────►  to S7
            500 m after Downshift ?
                            │ YES
                            ▼
  S23   ┌───────────────────────────────────────┐
        │ Not Shift There, but Execute          │
        │ Simulation of Fuel Consumption Rate   │
        └───────────────────┬───────────────────┘
                            │
                            ▼
  S24          Fuel Consumption
   NO      Rate More without Shift
             There than with ?
                            │ YES
  S25   ┌───────────────────┐
        │ Change to Map     │
        │ for No Shift There│
        └───────────────────┘
```

# FIG. 4

A      B      C      D

# FIG. 5

| | Information | | | Estimation Items | |
|---|---|---|---|---|---|
| | Speed Limit | Distance | Angle of Inclination | Vehicle Speed | Gear |
| A | 60km/h | 2km | 0° | 60km/h | 4 |
| B | 60km/h | 0.1km | 10° | 60km/h | 3 |
| C | 60km/h | 0.4km | -2.5° | 60km/h | 4 |
| D | 60km/h | 2km | 0° | 60km/h | 4 |

# FIG. 6

a = Lines of Equal Horse Power

EP 0 752 548 B1

# FIG. 7

| | | Information | | | Estimation Items | |
|---|---|---|---|---|---|---|
| | | Speed Limit | Distance | Angle of Inclination | Vehicle Speed | Gear |
| A | | 60km/h | 2km | 0° | 60km/h | 4 |
| B | | 60km/h | 0. 1km | 10° | 60km/h | 4 |
| C | | 60km/h | 0. 4km | −2. 5° | 60km/h | 4 |
| D | | 60km/h | 2km | 0° | 60km/h | 4 |

# FIG. 8

Torque

Engine RPM

Running with Horse Power A

Low

↑ Fuel Consumption Rate

High

b : Equal Driving Horse Power a +
    Loads for Using Air Conditioner and Others

a : Equal Driving Horse Power A

4th
4th  3rd
3rd
2nd
2nd
1st
1st

EP 0 752 548 B1

# FIG. 9

| | A | B | C | D | E | F | G |
|---|---|---|---|---|---|---|---|
| Charging Operation | Intermission | OFF | ON | Intermission | OFF | ON | Intermission |
| Air-Conditioning Operation | Intermission | OFF | ON | Intermission | OFF | ON | Intermission |

Starting Point

4th · 3rd · 2nd · 1st

Low Load / High Load

a  b   c d e  f    g  h  i j k  l

---------- Common for High-Low Load
------- Gear for Low Load
——— Gear for High Load

EP 0 752 548 B1